# EUROPEAN PATENT APPLICATION

(11) **EP 2 493 049 A2**
(43) Date of publication of application: **29.08.2012**
(21) Application number: 11160358.5
(22) Date of filing: 30.03.2011
(51) Int. Cl.: H02J 7/00

(54) **Electronic device**

(30) Priority: 22.02.2011 TW 100105839
(71) Applicant: Cotron Corporation, Taipei City 111 (TW)
(72) Inventor: Yang, Bill, 111, Taipei City (TW)
(74) Representative: Becker Kurig Straus

(57) **Abstract**

An electronic device includes a power controller and a power motor. The power controller is used to electrically connect a power storage device. The power motor includes a magnetic part and a coil part. The coil part has a main coil and a electromagnetic inducting coil that are electrically connected to the power controller. The main coil is used to drive a relative rotation of the magnetic part and the coil part. The electromagnetic inducting coil generates electricity which is inducted by a magnetic field of the magnetic part. The power storage device is charged by the electricity via the power controller.

## Description

### BACKGROUND OF THE INVENTION

### Field of the Invention

The invention relates to an electronic device. More particularly, the invention relates to an electronic device which can be charged by electricity generated by a power motor.

### Description of Related Art

With continuous advancement of technology, electronic products have been developed towards miniaturization. Common electronic products including tablet PCs, mobile phones, personal digital assistants (PDAs), and notebook computers become indispensable in people's daily lives. In consideration of portability, power required by the portable electronic devices is provided by rechargeable batteries configured in the electronic devices. Hence, the use time of the portable electronic devices is determined based on the power storage capacity of the rechargeable batteries. Given a user stays outdoors for over a long period of time and is thus unable to charge the rechargeable batteries, the exhausted batteries are no longer able to be used, which causes great inconvenience to the user. Accordingly, how to increase the electrical capacity of the electronic device in order to prolong the use of the electronic device becomes an essential topic.

### SUMMARY OF THE INVENTION

The invention is directed to an electronic device of which electrical capacity can be increased, such that the use time of the electronic device can be extended.

The invention provides an electronic device that includes a power controller and a power motor. The power controller is used to electrically connect a power storage device. The power motor includes a magnetic part and a coil part. The coil part has a main coil and a electromagnetic inducting coil that are electrically connected to the power controller. The main coil is used to drive a relative rotation of the magnetic part and the coil part. The electromagnetic inducting coil generates electricity which is inducted by a magnetic field of the magnetic part. The power storage device is charged by the electricity (generated by the electromagnetic inducting coil) via the power controller.

According to an embodiment of the invention, the electronic device further includes a fan fixed to the magnetic part or the coil part. The relative rotation of the magnetic part and the coil part drives the fan to rotate. In addition, the magnetic part can be a rotor, the coil part can be a stator, and the fan is fixed to the magnetic part.

According to an embodiment of the invention, the electronic device further includes an eccentric fixed to the magnetic part or the coil part. The relative rotation of the magnetic part and the coil part drives the eccentric to rotate.

According to an embodiment of the invention, the electronic device further includes a circuit module electrically connected to the power controller. Besides, the main coil can be electrically connected to the power controller via the circuit module.

According to an embodiment of the invention, the power controller includes a rectifier and a power management chip. The main coil is electrically connected to the power management chip. The electromagnetic inducting coil is electrically connected to the rectifier. The rectifier is electrically connected to the power management chip. The power management chip is electrically connected to the power storage device.

According to an embodiment of the invention, the electronic device further includes a protection circuit electrically connected to the power controller and the electromagnetic inducting coil for cutting off the electrical connection between the power controller and the electromagnetic inducting coil before the power controller is overloaded or for restricting an amount of the electricity output to the power controller from the electromagnetic inducting coil before the power controller is overloaded.

According to an embodiment of the invention, the power storage device is a rechargeable battery.

Based on the above, the power motor of the electronic device has the electromagnetic inducting coil according to the embodiments of the invention. Therefore, when the power motor is operated, the electromagnetic inducting coil can generate electricity inducted by the magnetic field of the magnetic part. The power storage device can be charged by the electricity generated by the electromagnetic inducting coil, so as to extend the use time of the electronic device.

In order to make the aforementioned and other features and advantages of the invention more comprehensible, embodiments accompanying figures are described in detail below.

### BRIEF DESCRIPTION OF THE DRAWINGS

The accompanying drawings constituting a part of this specification are incorporated herein to provide a further understanding of the invention. Here, the drawings illustrate embodiments of the invention and, together with the description, serve to explain the principles of the invention.

FIG. 1 is a schematic view illustrating an electronic device according to an embodiment of the invention.

FIG. 2 is an exploded view illustrating a portion of the power motor depicted in FIG. 1.

FIG. 3 is a circuit diagram of the electronic device depicted in FIG. 1.

FIG. 4 is a schematic view illustrating an electronic device according to another embodiment of the invention.

### DESCRIPTION OF EMBODIMENTS

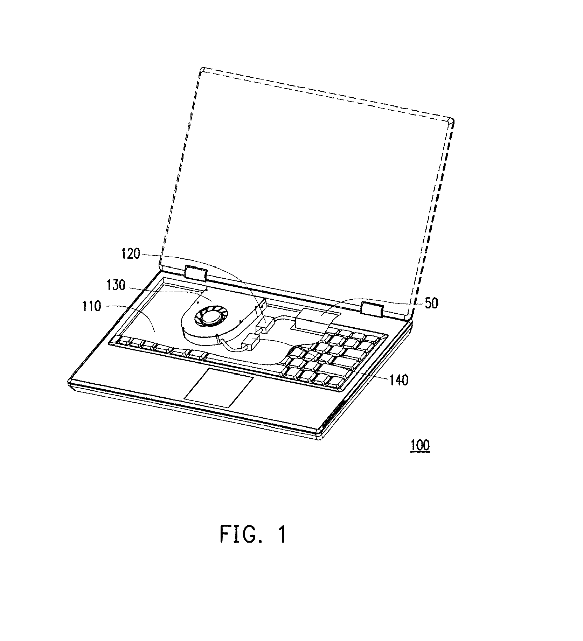

FIG. 1 is a schematic view illustrating an electronic device according to an embodiment of the invention. With reference to FIG. 1, the electronic device 100 of this embodiment includes a power controller 120 and a power motor 130. The power controller 120 is used to electrically connect a power storage device 50. According to this embodiment, the electronic device 100 can further include a circuit module 110. When the electronic device 100 is a notebook computer, the circuit module 110 is a computer module, for instance. Nonetheless, the electronic device provided in other embodiments of the invention can also be a tablet PC, a mobile phone, or any other electronic device. The power controller 120 can, from the power storage device 50, obtain the electricity required for operating the electronic device 100 and distribute the electricity to each element of the electronic device 100. Note that the electronic device 100 is also likely to use an external power source directly rather than employing the power storage device 50.

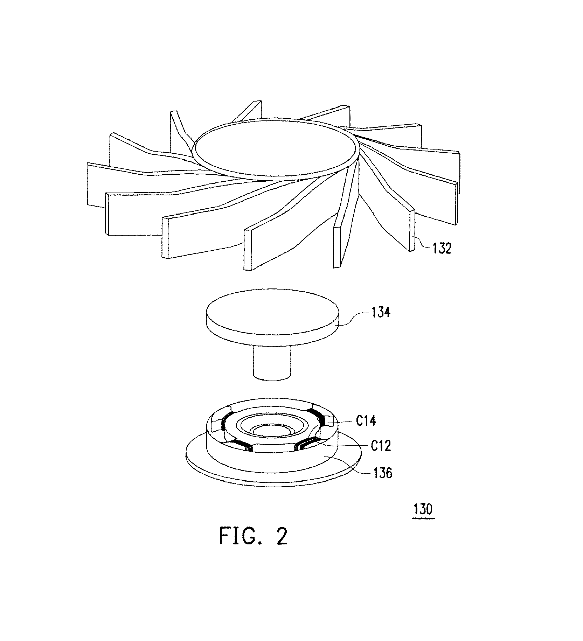

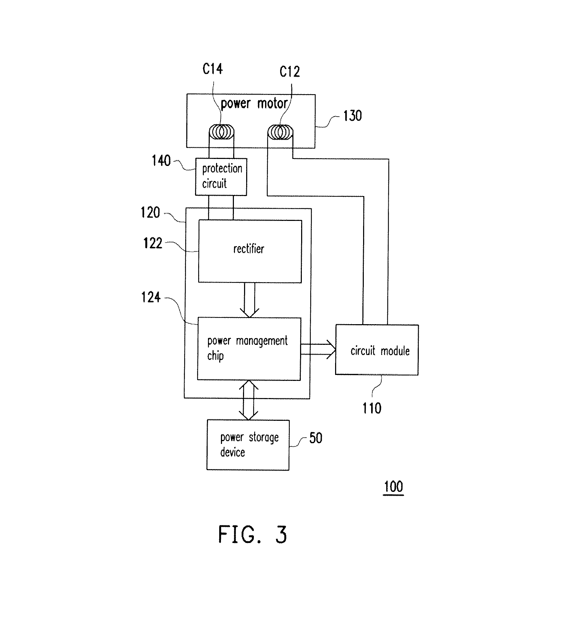

FIG. 2 is an exploded view illustrating a portion of the power motor depicted in FIG. 1. FIG. 3 is a circuit diagram of the electronic device depicted in FIG. 1. With reference to FIG. 2 and FIG. 3, the power motor 130 includes a magnetic part 134 and a coil part 136. The power motor 130 of this embodiment is exemplarily connected to a fan 132, whereas the power motor 130 in the electronic device 100 can also be applied for other purposes. In this embodiment, the fan 132 is fixed to the magnetic part 134, whereas the fan 132 described in other embodiments of the invention can be fixed to the coil part. Namely, according to this embodiment, the magnetic part 134 is a rotor, and the coil part 136 is a stator. Hence, the fan 132 fixed to the magnetic part 134 can be rotated together with the magnetic part 134 and generate air. In other embodiments of the invention, the coil part can be the rotor, the magnetic part can be the stator, and the fan can be fixed to the coil part and rotated together with the magnetic part to generate air. The coil part 136 has a main coil C12 and a electromagnetic inducting coil C14 that are electrically connected to the power controller 120. When electricity is supplied to the main coil C12, the magnetic field generated by the main coil C12 interacts with the magnetic field of the magnetic part 134, so as to drive the relative rotation of the magnetic part 134 and the coil part 136. Thereby, the fan 132 is driven to generate airflow and dissipates heat of the circuit module 110. During the relative rotation of the magnetic part 134 and the coil part 136, the magnetic field of the magnetic part 134 inducted by the electromagnetic inducting coil C 14 of the coil part 136 varies in terms of intensity and direction, and thus the electromagnetic inducting coil C14 generates electricity. The power storage device 50 is charged by the electricity (generated by the electromagnetic inducting coil C14) via the power controller 120, which complies with the current trend of reducing power consumption and carbon emissions.

In this embodiment, the power controller 120 includes a rectifier 122 and a power management chip 124. The main coil C12 is electrically connected to the power management chip 124. According to this embodiment, the main coil C12 is electrically connected to the power management chip 124 of the power controller 120 via the circuit module 110. The electromagnetic inducting coil C14 is electrically connected to the rectifier 122. The rectifier 122 is electrically connected to the power management chip 124. The electricity generated by the electromagnetic inducting coil C14 is often an alternating current, and the amount of the electricity is inconstant. Accordingly, the rectifier 122 is required for voltage boost and current stabilization. After that, the electricity is supplied to the power management chip 124. The power management chip 124 is electrically connected to the power storage device 50. Here, the power storage device 50 is a rechargeable battery, for instance. Note that the power storage device 50 is a component of the electronic device 100, and the electronic device 100 which is not equipped with the power storage device 50 does not go beyond the scope of the invention. At present, the charging procedures of the power storage device 50 in the market are rather complicated. Therefore, by means of the power management chip 124 that can control and monitor the charging procedures, the power storage device 50 can be ideally charged. For instance, the power management chip 124 manipulates the power charge of the power storage device 50 through a constant current approach in the primary stage of power charge. After an output voltage of the power storage device 50 stably reaches a predetermined value, the power management chip 124 manages to continually charge the power storage device 50 through the constant voltage approach.

With reference to FIG. 1 and FIG. 3, the electronic device 100 of this embodiment can further include a protection circuit 140 that is electrically connected to the power controller 120 and the power motor 130. The protection circuit 140 serves to cut off the electrical connection between the power controller 120 and the electromagnetic inducting coil C14 of the power motor 130 before the power controller 120 is overloaded. Alternatively, the protection circuit 140 can restrict the amount of electricity output to the power controller 120 from the electromagnetic inducting coil C14 before the power controller 120 is overloaded. For instance, the protection circuit 140 can assure the voltage value or the current value of the electricity output from the electromagnetic inducting coil C14 to the power controller 120 to be equal to or below a threshold value. The protection circuit 140 can protect the power controller 120 which is rather expensive and is likely to affect operation of other components in the electronic device 100. Accordingly, by applying the protection circuit 140, electricity can be prevented from being excessively generated by the power motor 130, and the power controller 120 can be protected from being overloaded and burned out.

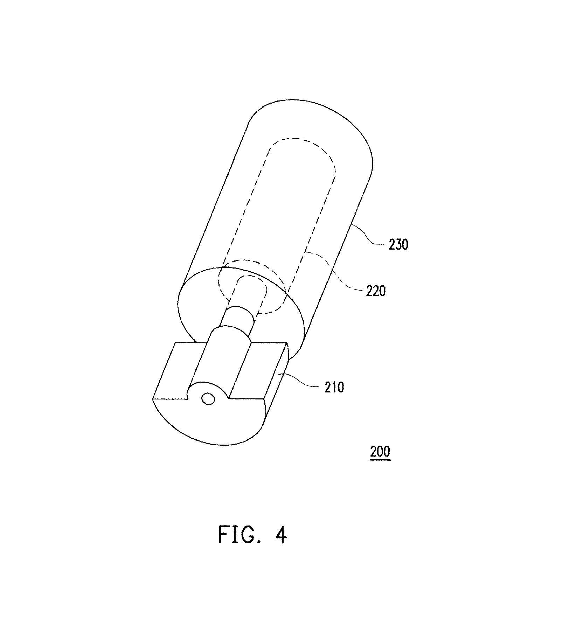

FIG. 4 is a schematic view illustrating an electronic device according to another embodiment of the invention. With reference to FIG. 4, both the power motor 200 in the electronic device of this embodiment and the power motor 130 described in the previous embodiment can generate electricity. The difference between the power motor 200 and the power motor 130 lies in that the power motor 200 of this embodiment is not equipped with the fan but with an eccentric 210 fixed to the coil part 220. The relative rotation of the magnetic part 230 and the coil part 220 drives the eccentric 210 to rotate and vibrate. In other embodiments of the invention, the eccentric can also be fixed to the magnetic part.

In light of the foregoing, the power motor in the electronic device of the invention has the electromagnetic inducting coil that can generate electricity inducted by the magnetic field. Therefore, when the power motor is in the required operation, the magnetic field of the magnetic part is simultaneously inducted to generate the electricity. As such, the electricity stored in the power storage device can be increased, and the use time of the electronic device can be extended. Namely, the environmental concern of reducing energy consumption and carbon emissions is taken into account. The design of recycling the electricity to extend the use time of the electronic device, as described in the embodiments of the invention, may be of great help to the user of the electronic device at the crucial moment.

Although the invention has been described with reference to the above embodiments, it will be apparent to one of the ordinary skill in the art that modifications to the described embodiments may be made without departing from the spirit of the invention. Accordingly, the scope of the invention will be defined by the attached claims rather than by the above detailed descriptions.

## Claims

1. An electronic device (100) comprising:
a power controller (120) for electrically connecting a power storage device (50); and
a power motor (130, 200) comprising a magnetic part (134, 230) and a coil part (136, 220), the coil part (136, 220) having a main coil (C12) and a electromagnetic inducting coil (C 14), the main coil (C12) and the electromagnetic inducting coil (C 14) being electrically connected to the power controller (120), the main coil (C12) driving a relative rotation of the magnetic part (134, 230) and the coil part (136, 220), the electromagnetic inducting coil (C14) generating electricity inducted by a magnetic field of the magnetic part (134, 230), wherein the power storage device (50) is charged by the electricity via the power controller (120).

2. The electronic device (100) as claimed in claim 1, further comprising a fan (132) fixed to the magnetic part (134) or the coil part (136), wherein the relative rotation of the magnetic part (134) and the coil part (136) drives the fan (132) to rotate.

3. The electronic device (100) as claimed in claim 2, wherein the magnetic part (134) is a rotor, the coil part (136) is a stator, and the fan (132) is fixed to the magnetic part (134).

4. The electronic device (100) as claimed in claim 1, further comprising an eccentric (210) fixed to the magnetic part (230) or the coil part (220), wherein the relative rotation of the magnetic part (230) and the coil part (220) drives the eccentric (210) to rotate.

5. The electronic device (100) as claimed in claim 1, further comprising a circuit module (110) electrically connected to the power controller (120).

6. The electronic device (100) as claimed in claim 5, wherein the main coil (C12) is electrically connected to the power controller (120) via the circuit module (110).

7. The electronic device (100) as claimed in claim 1, wherein the power controller (120) comprises a rectifier (122) and a power management chip (124), the main coil (C12) is electrically connected to the power management chip (124), the electromagnetic inducting coil (C14) is electrically connected to the rectifier (122), the rectifier (122) is electrically connected to the power management chip (124), and the power management chip (124) is electrically connected to the power storage device (50).

8. The electronic device (100) as claimed in claim 1, further comprising a protection circuit (140) electrically connected to the power controller (120) and the electromagnetic inducting coil (C14) for cutting off the electrical connection between the power controller (120) and the electromagnetic inducting coil (C14) before the power controller (120) is overloaded or for restricting an amount of the electricity output to the power controller (120) from the electromagnetic inducting coil (C14) before the power controller (120) is overloaded.

9. The electronic device (100) as claimed in claim 1, wherein the power storage device (50) is rechargeable battery.
